# DEMANDE DE BREVET EUROPEEN

(11) **EP 1 657 433 A1**
(43) Date de publication de la demande: **17.05.2006**
(21) Numéro de dépôt: 05300871.0
(22) Date de dépôt: 27.10.2005
(51) Int. Cl.: F02M 61/14, F16B 21/16

(54) **Agencement pour la fixation d'un porte-injecteur de carburant sur une culasse de moteur thermique**

(30) Priorité: 16.11.2004 FR 0452635
(71) Demandeur: Renault s.a.s., 92100 Boulogne Billancourt (FR)
(72) Inventeur: Priou, Rémy, 77185, Lognes (FR)

(57) **Abrégé**

L'invention propose un agencement (14) pour la fixation d'un porte-injecteur (10) de carburant sur une culasse (16) de moteur thermique, du type dans lequel une partie inférieure (24) du corps annulaire (20) du porte-injecteur (10) est reçu axialement dans un puits inférieur (52) formé dans la culasse (16) et dans lequel le porte-injecteur (10) est fixé sur la culasse (16) par l'intermédiaire d'un dispositif de fixation (12) comportant au moins une bride de serrage (54) pour immobiliser axialement le porte-injecteur (10) dans le puits (52) de la culasse (16) et des moyens d'immobilisation (90) en rotation et d'orientation angulaire du porte-injecteur (10) par rapport à la culasse (16), caractérisé en ce que les moyens (90) d'immobilisation en rotation du porte-injecteur (10) sont constitués par une pièce rapportée (66) qui est fixée sur la bride (54) de serrage axial.

## Description

La présente invention concerne un agencement pour la fixation d'un porte-injecteur de carburant, en particulier sur une culasse d'un moteur thermique de véhicule automobile.

La présente invention concerne plus particulièrement un agencement pour la fixation d'un porte-injecteur de carburant sur une culasse d'un moteur thermique, du type dans lequel une partie inférieure du corps annulaire du porte-injecteur est reçu axialement dans un puits inférieur formé dans la culasse et dans lequel le porte-injecteur est fixé sur la culasse par l'intermédiaire d'un dispositif de fixation comportant au moins une bride de serrage pour immobiliser axialement le porte-injecteur dans le puits de la culasse et des moyens d'immobilisation en rotation et d'orientation angulaire du porte-injecteur par rapport à la culasse.

On connaît de nombreux exemples d'agencement de ce type pour des moteurs thermique ou à combustion interne de véhicule automobile, notamment du type à injection directe et à allumage par compression de type Diesel.

Chaque moteur comporte généralement une culasse, voire parfois un couvre-culasse, comportant une face supérieure qui présente une géométrie particulière en fonction des applications, notamment le dégagement autour des puits destinés à recevoir axialement les moyens d'injection, tels qu'un porte-injecteur.

La disposition des puits par rapport aux organes adjacents, tels que les pipes d'admission et d'échappement, détermine le plus souvent de manière contraignante le choix du type de dispositif de fixation, notamment pour leur implantation sans interférence avec lesdits organes.

Cependant, si de nombreux dispositifs de fixation ont été conçus et réalisés spécifiquement pour des applications données, on distingue principalement deux conceptions d'un dispositif de fixation pour la fixation d'un porte-injecteur de carburant sur une culasse de moteur.

Selon une première conception, le dispositif de fixation est une bride de serrage présentant une forme de "bague" sensiblement ovale qui coopère avec une partie du corps du porte-injecteur pour l'immobiliser, au moins axialement, dans le puits de la culasse.

Le document FR-A-2.807.110 décrit un exemple de réalisation d'un tel dispositif de fixation par l'intermédiaire duquel le porte-injecteur est immobilisé axialement sur la culasse.

Le dispositif de fixation est constitué par une bride de serrage comportant un trou central, de section circulaire, traversé verticalement par le corps axial du porte-injecteur qui comporte un élément radial annulaire d'arrêt contre lequel une face inférieure d'appui complémentaire de la bride vient prendre appui pour exercer un effort axial de serrage.

Le porte-injecteur est ainsi sollicité axialement vers la culasse par la bride de fixation qui comporte deux trous de fixation agencés latéralement de part et d'autre du trou central de la bride de fixation et traversés chacun par une vis axiale de serrage dont la tête prend appui sur la bride et dont le corps fileté est vissé dans un trou taraudé complémentaire de la culasse.

Les documents FR-A-2.211.600 ou EP-A-0.126.134 décrivent des brides de fixation de ce type qui assurent d'une part l'immobilisation axiale du porte-injecteur sur la culasse et, d'autre part, son immobilisation en rotation, par coopération de formes respectivement entre deux méplats formés dans la paroi externe du corps et deux faces planes internes que comporte le trou central de la bride.

Selon une deuxième conception, le dispositif de fixation est une bride de serrage présentant une forme de fourche en U qui coopère avec une partie du corps du porte-injecteur pour l'immobiliser axialement dans le puits de la culasse.

Le document FR-A-2.756.872 décrit un exemple de réalisation d'un tel dispositif de fixation comportant une bride à fourche dont une extrémité en forme de U possédant deux bras parallèles coopère avec le corps de l'injecteur, la bride étant fixée sur la culasse par l'intermédiaire d'une vis qui s'engage dans un trou de la bride et qui vient se serrer dans la culasse.

L'autre extrémité de la bride à fourche s'étendant à l'opposé des bras de l'extrémité en U est articulée sur la culasse.

Ce type de bride à fourche nécessite pour son agencement une culasse de moteur comportant une ligne d'injecteur, dite "dégagée", c'est-à-dire que chaque puits présente suivant la direction d'alignement des injecteurs un dégagement correspondant au moins à la plus grande longueur de la bride, soit entre ses deux extrémités.

Chaque bride à fourche est dimensionnée en fonction des applications et se comporte comme un levier mobile articulé dont les bras exercent un effort sur le corps du porte injecteur pour l'immobiliser axialement dans le puits de la culasse.

L'effort est déterminé par l'effort de serrage de la vis et est aussi fonction du bras de levier existant entre le porte injecteur et la vis, en effet le bras de levier permet de démultiplier au niveau du porte-injecteur l'effort de tension auquel est soumis la vis.

Le document US-A-4.206.725 décrit un autre exemple de réalisation d'un tel dispositif de fixation similaire comportant une bride à fourche.

En fonction de chaque culasse de moteur et du type de porte-injecteur à monter sur la culasse il est nécessaire de concevoir et de fabriquer un dispositif de fixation spécifique de sorte que les coûts de fabrication se trouvent sensiblement augmentés.

C'est une des raisons pour lesquelles, on cherche à standardiser les dispositifs de fixation et plus particulièrement à permettre le montage d'un porte-injecteur d'un type donné sur des moteurs comportant des culasses différentes.

Pour résoudre ce problème, l'invention propose un agencement pour la fixation d'un porte-injecteur comportant des moyens distincts pour immobiliser le porte-injecteur respectivement axialement et en rotation avec indexation angulaire et permettant de monter un même type de porte-injecteur sur différentes culasses de moteur.

Dans ce but, l'invention propose un agencement pour la fixation d'un porte-injecteur de carburant sur une culasse d'un moteur thermique du type décrit précédemment, caractérisé en ce que les moyens d'immobilisation en rotation du porte-injecteur sont constitués par une pièce rapportée qui est fixée sur la bride de serrage axial.

Grâce à l'invention, il est notamment possible de fixer un porte-injecteur comportant des moyens complémentaires destinés à coopérer avec une bride à fourche, c'est à dire selon la deuxième conception, sur une culasse de moteur ne comportant pas de ligne d'injecteur dégagée et permettant uniquement le montage de bride de serrage selon la première conception de l'état de la technique.

Avantageusement, la bride de serrage axial est plus simple à fabriquer car elle comporte un trou central de section circulaire et assure uniquement la fonction d'immobilisation axiale du porte-injecteur dans le puits de la culasse.

La bride de serrage axial est donc susceptible d'être standardisée pour un diamètre de corps d'injecteur donné et cela indépendamment la pièce rapportée destinée, conformément à l'invention, à assurer l'immobilisation en rotation du porte-injecteur, avantageusement avec une indexation angulaire pour positionner le nez d'injection dans une position de fonctionnement déterminée.

De plus, la pièce rapportée est particulièrement simple et économique à fabriquer, par exemple par des opérations successives de découpe, d'emboutissage et de pliage d'une plaque en tôle.

Selon d'autres caractéristiques de l'invention :
- la pièce comporte axialement au moins un socle inférieur de fixation de la pièce sur la bride de serrage, une partie intermédiaire de liaison et une partie supérieure d'immobilisation destinée à coopérer avec une partie complémentaire du corps du porte-injecteur ;
- le socle inférieur de fixation comporte à l'une au moins de ses extrémités transversales un perçage traversé par des moyens de fixation, tels qu'une vis, de manière à fixer la pièce sur la bride de serrage ;
- les moyens de fixation sont constitués par des moyens de serrage axial de la bride sur la culasse ;
- le socle de la pièce et la bride de serrage comportent des moyens complémentaires de détrompage de manière à garantir un positionnement correct de la pièce lors de son montage sur la bride ;
- la partie intermédiaire de liaison du socle et de la partie supérieure d'immobilisation est constituée par une tige qui s'étend axialement sur une hauteur déterminée en fonction du type de porte-injecteur et qui est déportée radialement par rapport à l'axe X-X du puits de la culasse de manière à ne pas interférer avec le corps axial du porte-injecteur ;
- la partie supérieure d'immobilisation comporte au moins un moyen d'immobilisation comportant des moyens de blocage, tels qu'une face verticale interne, qui coopèrent avec une partie complémentaire du corps du porte-injecteur pour l'immobiliser en rotation par rapport à la culasse ;
- la partie supérieure d'immobilisation est une fourche ouverte horizontalement qui comporte une branche transversale supérieure commune et à partir de laquelle s'étendent globalement horizontalement et parallèlement deux dents qui coopèrent avec la paroi externe du corps annulaire pour immobiliser le porte-injecteur en rotation ;
- chaque dent de la fourche comporte une face verticale interne de blocage qui coopère avec une face verticale d'appui complémentaire du corps du porte-injecteur ;
- chaque face interne de blocage de la fourche est plane et comprise dans un plan vertical formant avec un plan vertical de référence, défini comme le plan vertical qui est orthogonal au plan transversal passant par l'axe X-X, un angle aigu déterminée correspondant à l'indexation angulaire du porte-injecteur dans une position de fonctionnement donnée par rapport au puits de la culasse.

D'autres caractéristiques et avantages de l'invention apparaîtront à la lecture de la description détaillée qui suit pour la compréhension de laquelle on se reportera aux figures annexées parmi lesquelles :
- la figure 1 est une vue en perspective qui représente en éclaté avant leur montage un porte-injecteur de carburant et un dispositif pour sa fixation sur une culasse de moteur comportant une bride de serrage axial et, selon un exemple de réalisation de l'invention, une pièce rapportée sur la bride de serrage axial pour l'immobilisation en rotation du porte-injecteur ;
- la figure 2 est une vue de dessous de la pièce d'immobilisation en rotation du porte-injecteur qui est représentée à la figure 1 ;
- la figure 3 est une vue en perspective d'un agencement selon l'invention qui représente partiellement une culasse de moteur sur laquelle est fixée un porte-injecteur par l'intermédiaire d'un dispositif de fixation selon l'invention.

Dans la description et les revendications, pour en faciliter la compréhension, on utilisera à titre non limitatif les orientations longitudinale, verticale et transversale selon le trièdre (L, V, T) représenté aux figures et les expressions telles que "supérieur" et "inférieur", ou "haut" et "bas" en référence aux figures et définitions données dans la description.

Les éléments identiques, similaires ou analogues seront désignés par les mêmes chiffres de référence.

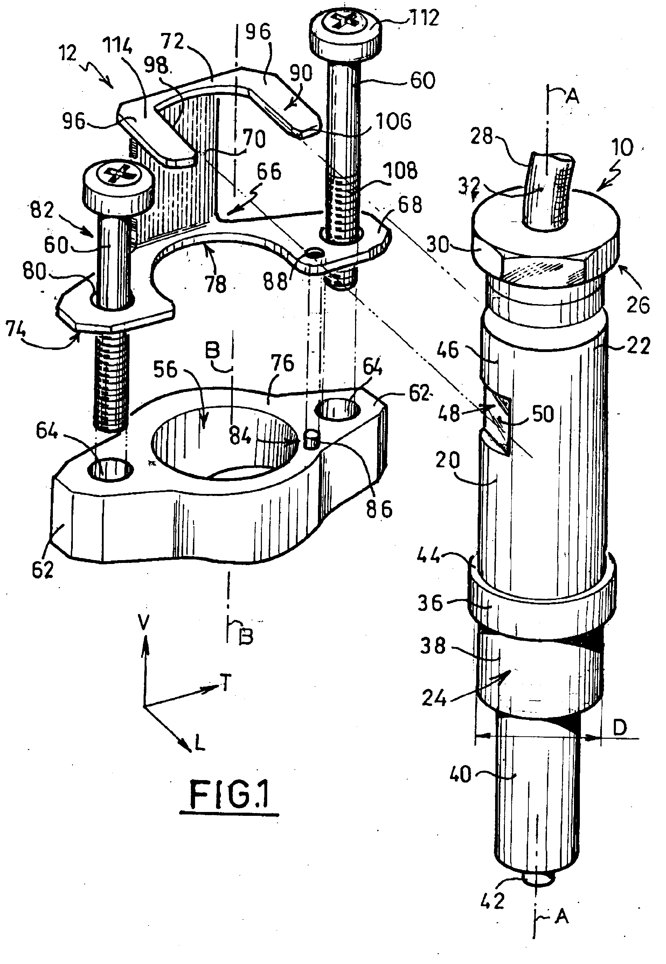

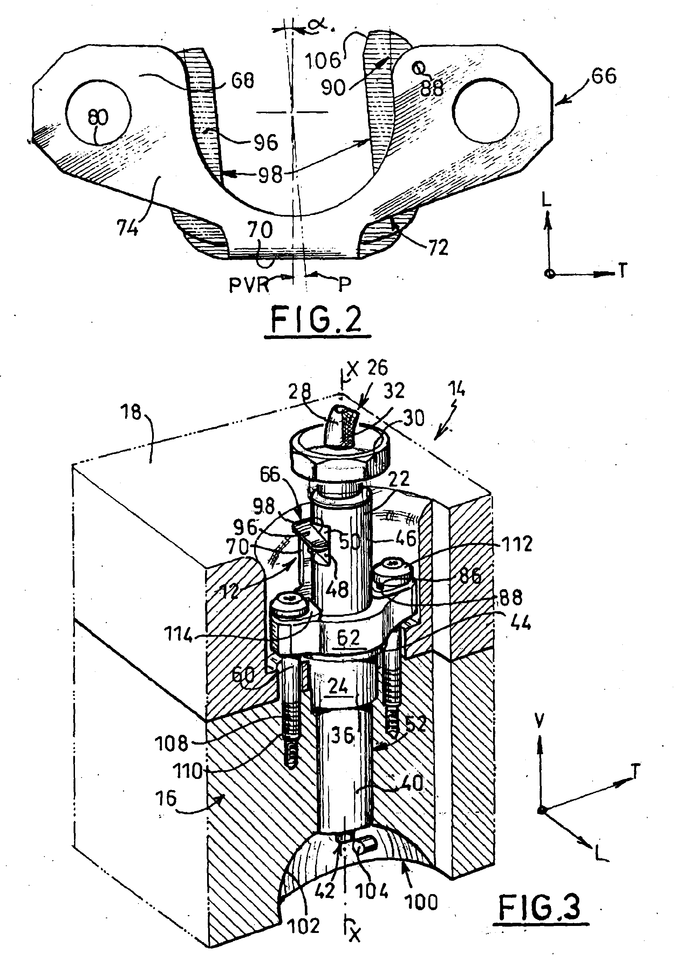

On a représenté à la figure 1, un porte-injecteur 10 de carburant et un dispositif 12 de fixation d'un tel porte-injecteur 10 qui permet, comme l'illustre plus particulièrement l'agencement de fixation 14 de la figure 3, son montage sur une culasse 16 de moteur thermique, ici du type comportant un couvre-culasse 18.

Le porte-injecteur 10 comporte un corps annulaire cylindrique 20, ici de section circulaire, qui s'étend axialement suivant un axe principal A-A, qui est un axe vertical selon le trièdre (L, V, T) représenté à la figure 1.

Le corps 20 du porte-injecteur 10 comporte axialement une partie supérieure 22, encore appelée "corps-support", et une partie inférieure 24, encore appelée "écrou-raccord".

De manière connue, la partie supérieure 22 comporte à son extrémité axiale supérieure un embout tubulaire 26 appartenant à un agencement pour le raccordement d'une des extrémités d'un tuyau 28 destiné à alimenter en carburant le porte-injecteur 10 et dont l'autre extrémité est par exemple raccordée par un agencement analogue à une pompe d'injection ou une rampe commune d'injection, dite "common rail".

L'agencement pour le raccordement de l'extrémité du tuyau 28 sur l'embout tubulaire 26 comporte généralement un organe de serrage 30, tel qu'un écrou, qui est traversé par le corps tubulaire 32 du tuyau 28. Le tuyau 28 comporte à son extrémité inférieure une tête de liaison, ou olive, sur un épaulement de laquelle l'organe de serrage 30 exerce un effort axial orienté vers le bas de manière à faire coopérer étanchement la partie inférieure de ladite tête avec un siège complémentaire que comporte l'embout tubulaire 26.

La partie supérieure 22 du corps 20 comporte de préférence, à son extrémité axiale inférieure 34, un filetage pour le raccordement par vissage de la partie inférieure 24 du corps 20 du porte-injecteur 10.

La partie inférieure 24 du corps 20 comporte, verticalement de haut en bas, un tronçon cylindrique supérieur 36, un tronçon cylindrique intermédiaire 38 et un tronçon cylindrique inférieur 40.

Le tronçon cylindrique supérieur 36 comporte une paroi cylindrique interne taraudée pour son vissage sur le filetage complémentaire de la partie supérieure 22 du corps 20.

Les tronçons intermédiaire 38 et inférieur 40 délimitent un logement interne étagé dans lequel est reçu un injecteur (non représenté) comportant à son extrémité axiale inférieure un nez d'injection 42 pour pulvériser le carburant.

Le tronçon cylindrique supérieur 36 de la partie inférieure 24 du corps 20 est d'un diamètre extérieur supérieur au diamètre extérieur D de la partie supérieure 22 du corps 20 de sorte que le tronçon cylindrique supérieur 36 forme, au niveau de son raccordement avec la partie supérieure 22, un épaulement annulaire 44.

L'épaulement 44 s'étend radialement à partir du corps 20 et dans un plan globalement horizontal, ici orthogonal à l'axe principal A-A, de sorte qu'il constitue axialement un élément d'arrêt destiné à coopérer avec des moyens complémentaires du dispositif de fixation 12.

Avantageusement, la partie supérieure 22 du corps 20 du porte-injecteur 10 comporte dans sa paroi cylindrique externe 46 des moyens 48, tels qu'au moins une rainure ou un bossage, qui sont susceptibles de coopérer avec des moyens de formes complémentaires du dispositif de fixation 12.

Les moyens sont ici constitués par un méplat 48 qui est par exemple réalisé par usinage dans l'épaisseur de la partie supérieure 22 du corps 20 et suivant une génératrice rectiligne d'orientation longitudinale de manière à former latéralement dans la paroi cylindrique 46 une face verticale plane d'appui 50.

Comme on peut le voir sur la figure 3, le porte-injecteur 10 est, en position montée, reçu axialement dans un puits inférieur 52 formé essentiellement dans la culasse 16, le couvre-culasse 18 comportant un orifice de dégagement alignés axialement avec le puits 52.

Le porte-injecteur 10 est donc fixé sur la culasse 16 du moteur thermique par l'intermédiaire du dispositif de fixation 12 qui va être décrit ci-après.

Le dispositif de fixation 12, qui est représenté en éclaté à la figure 1, comporte notamment au moins une bride de serrage 54 pour immobiliser axialement le porte-injecteur 10 dans le puits 52 de la culasse 16.

La bride de serrage 54 est ici une bride de fixation du type de celle décrite en préambule, c'est-à-dire correspondant à la première conception connue de l'état de la technique.

En variante, la bride de serrage 54 est une bride à fourche, soit une bride de fixation du type de celle décrite en préambule et correspondant à la deuxième conception connue de l'état de la technique.

La bride de serrage 54 présente globalement une forme "ovale" ou encore "elliptique", plus précisément d'une ellipse d'axe principal s'étendant suivant la direction transversale du trièdre (L, V, T) de la figure 1.

La bride de serrage 54 est traversé axialement par un trou principal 56, ici centré sur l'axe vertical B-B de la bride, et qui présente, suivant un plan de coupe horizontal, une section circulaire d'un diamètre intérieur sensiblement supérieur au diamètre extérieur D de la partie supérieure 22 du corps 20 du porte-injecteur 10 de manière à permettre axialement le montage de la bride 54 autour du corps 20.

Plus précisément, la bride de serrage 54 est, de préférence avant le raccordement de l'agencement 26 pour la fixation du tuyau 28, montée suivant un mouvement vertical de haut en bas au cours duquel le trou central 56 est traversé par la partie supérieure 22 du corps 20 jusqu'à ce que la zone adjacente au trou 56 de la face horizontale inférieure 58 vienne prendre appui axialement contre l'épaulement annulaire 44 solidaire du corps 20 du porte-injecteur 10 et formant un élément d'arrêt axial pour la bride 54.

En variante, l'élément d'arrêt axial, par exemple un anneau qui coopère avec la bride 54, est rapporté de manière solidaire sur le corps 20 du porte-injecteur 10.

La bride 54 est donc susceptible d'exercer sur l'épaulement 44 un effort axial, orienté verticalement vers le bas, de manière à immobiliser axialement le porte-injecteur 10 sur la culasse 16.

L'effort axial est déterminé par des moyens de serrage axial, tels que des vis 60 qui maintiennent la bride 54 sur la culasse 16.

La bride de serrage 54 comporte deux parties latérales 62 qui s'étendent transversalement et qui sont respectivement traversées axialement par un trou 64, d'axe vertical parallèle à l'axe principal B-B de la bride, que traverse chaque vis 60 de maintien de la bride 54 sur la culasse 16.

De plus, le dispositif de fixation 12 comporte généralement des moyens 66 d'immobilisation en rotation du porte-injecteur 10 par rapport à la culasse 16 et qui, avantageusement, permettent d'indexer angulairement le porte-injecteur 10.

Conformément à l'invention, les moyens 66 d'immobilisation en rotation du porte-injecteur 10 sont constitués par une pièce rapportée 66 qui est fixée sur la bride 54 de serrage axial du porte-injecteur 10.

Les figures 1 et 2 représentent un exemple de réalisation préféré d'une telle pièce rapportée 66 selon l'invention.

La pièce 66 présente globalement une forme de "C" et comporte axialement au moins un socle inférieur 68 de fixation de la pièce 66 sur la bride de serrage 54, une partie intermédiaire de liaison 70 et une partie supérieure 72 d'immobilisation destinée à coopérer avec une partie complémentaire, ici le méplat 48, du corps 20 du porte-injecteur 10.

Le socle inférieur de fixation 68 comporte une face inférieure 74 qui, en position montée, coopère avec une face horizontale supérieure 76 de la bride de serrage axial 54.

Le socle inférieur 68 présente un pourtour dont le profil est complémentaire de celui de la bride 54, à savoir un évidement central 78 correspondant au trou circulaire 56 et à chacune de ses extrémités transversales, un perçage 80 pour des moyens de fixation 82, tels qu'une vis, de manière à fixer la pièce 66 sur la bride de serrage 54.

Chaque perçage 80 est ici centré sur l'axe vertical du trou 64 de la bride 54 de manière que les moyens de fixation 82 soient avantageusement constitués par les vis 60 de serrage axial de la bride 54 sur la culasse 16.

De préférence, il est prévu des moyens de détrompage 84 de manière à garantir un positionnement correct de la pièce 66 lors de son montage sur la bride 54.

Les moyens de détrompage 84 sont par exemple constitués par un pion 86 qui s'étend verticalement vers le haut en saillie par rapport à la face horizontale supérieure 76 de la bride 54 et qui est reçu, en position montée, dans un trou complémentaire 88 que comporte verticalement en vis-à-vis le socle 68 de la pièce 66.

En variante non représentée, les moyens de détrompage 84 sont constitués par une patte, solidaire du socle 68, qui s'étendant verticalement vers le bas est reçue dans un logement complémentaire, tel qu'une rainure, réalisée dans la bride 54, par exemple dans le bord externe ou la paroi cylindrique interne du trou central 56.

On notera que l'axe principal A-A du porte-injecteur 10 et l'axe B-B de la bride sont coaxiaux et sont, en position montée illustrée à la figure 3, respectivement confondus avec l'axe X-X du puits 52 de la culasse 16.

La partie intermédiaire 70 de liaison du socle 68 et de la partie supérieure d'immobilisation 72 est constituée par une tige 70 qui s'étend axialement de manière rectiligne sur une hauteur donnée. La tige de liaison 70 est déportée radialement, ici longitudinalement, par rapport à l'axe vertical B-B de la bride 54 et l'axe X-X du puits 52 de manière à ne pas interférer, en position montée, avec le corps axial 20 du porte-injecteur 10.

La tige 70 s'étend transversalement sur une largeur donnée pour conférer une rigidité d'ensemble suffisante à la pièce 66.

En variante, la tige 70 comporte des moyens de réglage permettant de faire varier la hauteur, c'est-à-dire la distance entre le socle 68 et la partie supérieure d'immobilisation 72, pour positionner la partie supérieure d'immobilisation 72 à une hauteur déterminée en fonction du type de porte-injecteur 10.

De tels moyens de réglage (non représentés) sont par exemple constitués au moyen d'une tige 70 réalisée en deux parties complémentaires, respectivement solidaires du socle 68 et de la partie supérieure d'immobilisation 72, aptes à coulisser verticalement l'une par rapport à l'autre et à être bloqués axialement lorsque la partie supérieure d'immobilisation 72 se trouve à la hauteur déterminée correspondant au porte-injecteur 10 à fixer sur la culasse 16.

La partie supérieure d'immobilisation 72 comporte au moins un moyen d'immobilisation 90 comportant des moyens de blocage et coopérant avec une partie complémentaire du corps 20 pour immobiliser le porte-injecteur 10 en rotation par rapport à la culasse 16.

Avantageusement, la partie supérieure d'immobilisation 72 est une fourche 92, ouverte horizontalement, qui comporte une branche transversale supérieure commune 94 et à partir de laquelle s'étendent globalement horizontalement et parallèlement deux dents longitudinales 96 formant lesdits moyens d'immobilisation 90.

Les dents 96 de la fourche 92 coopèrent avec la paroi cylindrique externe 46 du corps 20 pour immobiliser le porte-injecteur 10 en rotation.

Chaque dent 96 de la fourche 92 comporte une face verticale interne 98, dite face de blocage, qui coopère avec la face verticale 50 complémentaire, dite face d'appui, formée à la faveur du méplat 48 correspondant dans la paroi cylindrique externe 46 de la partie supérieure 22 du corps 20 du porte-injecteur 10.

La partie supérieure 22 du corps 20 du porte-injecteur 10 comporte deux méplats 48 respectivement associés à chaque dent 96 de la fourche 92.

De préférence et comme on peut le voir sur la figure 2, chaque face interne de blocage 98 de la fourche 92 est ici plane et comprise dans un plan vertical P formant avec un plan vertical de référence PVR, qui est défini comme le plan vertical orthogonal au plan transversal passant par l'axe X-X ou encore l'axe B-B, un angle aigu (α) déterminé correspondant à l'indexation angulaire du porte-injecteur 10 dans une position de fonctionnement donnée par rapport au puits 12 de la culasse 16.

L'indexation angulaire du porte-injecteur 10 dans une position de fonctionnement donnée est notamment requise dans le cas de moteur thermique de véhicule automobile du type à injection directe et à allumage par compression de type Diesel.

En effet et comme on peut mieux le voir à la figure 3, dans ce type de moteur, le nez d'injection 42 est agencé de manière à pulvériser le carburant dans une chambre 100, dite chambre de turbulence, qui communique avec la chambre de combustion du cylindre du moteur et dans la paroi interne 102 de laquelle débouche des moyens de préchauffage 104, telle qu'une bougie-crayon.

Or dans ce type de moteur, la nappe de carburant pulvérisé par le nez d'injection 42 ne doit pas interférer avec les moyens de préchauffage 104 et le porte-injecteur 10 doit donc être positionné angulairement dans une position de fonctionnement bien déterminée.

Avantageusement, la largeur entre les dents parallèles 96 est donc usinée pour être ajustée avec précision aux dimensions des faces d'appui 50 des méplats 48 que comporte le corps 20 du porte-injecteur 10.

De préférence, chaque dent 96 de la fourche 92 comporte à son extrémité longitudinale avant, opposée à la tige 70, et dans le prolongement de sa face interne de blocage 98, un chanfrein 106 pour faciliter le montage de la pièce 66 et du porte-injecteur 10.

La figure 3 représente le porte-injecteur 10 de carburant dans une telle position de fonctionnement et qui est fixé sur la culasse 16 par l'intermédiaire d'un dispositif de fixation 12 conforme à l'invention.

Dans cette position, chaque vis de serrage 60 comporte un corps fileté 108 qui est reçu dans un trou taraudé 110 complémentaire de la culasse 16 et dont la tête de vis 112 prend appui sur la face horizontale supérieure 114 du socle 68 adjacente au trou 80.

Avantageusement, le porte-injecteur 10 est immobilisé en rotation et indexé angulairement dès lors qu'il est monté et positionné dans le dispositif de fixation 12, par conséquent avant de procéder à sa fixation sur la culasse 16 par serrage des vis 60.

La pièce 66 selon l'invention permet donc, sans aucune modification du porte-injecteur 10, la fixation d'un porte-injecteur 10 réalisé conformément à la deuxième conception connue de l'état de la technique c'est-à-dire du type comportant des moyens, tels que les méplats 48, destinés à coopérer avec une bride à fourche, sur une culasse 16 de moteur thermique conçue pour permettre la fixation de porte-injecteur 10 au moyen de bride de fixation conforme à la première conception de l'état de la technique.

Ainsi qu'on l'aura compris, les moyens d'immobilisation 90 peuvent en variante être constitués par un unique bras longitudinal, analogue à l'une des dents 96 de la fourche 92, qui par coopération de formes avec le corps 20 assure l'immobilisation en rotation du porte-injecteur 10 par rapport à la culasse 16.

Grâce à l'invention, un porte-injecteur 10 du type de celui représenté à la figure 1 est susceptible d'être fixé soit sur certaines culasse 16 de moteur au moyen d'un bride à fourche selon la deuxième conception, soit sur d'autres types de culasse 16 au moyen d'un dispositif de fixation 12 comportant une bride 54 et une pièce rapportée 66 selon l'invention.

Avantageusement, la pièce 66 est fabriquée en grande série et à faible coût avec des dents 96 comportant des faces internes de blocage 98 parallèles et longitudinales qui sont ultérieurement usinées avec un angle aigu (α) déterminé en fonction de l'indexation angulaire souhaitée pour une application donnée.

Il est donc possible de standardiser d'une part le porte-injecteur 10 qui peut dès lors être fixé sur différents types de culasse 16 de moteur et ceci au bénéfice d'une réduction des coûts par rapport à l'état de la technique et, d'autre part, la bride de serrage 54 pour un diamètre D donné de corps 20 de porte-injecteur 10.

## Revendications

1. Agencement (14) pour la fixation d'un porte-injecteur (10) de carburant sur une culasse (16) de moteur thermique, du type dans lequel une partie inférieure (24) du corps annulaire (20) du porte-injecteur (10) est reçu axialement dans un puits inférieur (52) formé dans la culasse (16) et dans lequel le porte-injecteur (10) est fixé sur la culasse (16) par l'intermédiaire d'un dispositif de fixation (12) comportant au moins une bride de serrage (54) pour immobiliser axialement le porte-injecteur (10) dans le puits (52) de la culasse (16) et des moyens d'immobilisation (90) en rotation et d'orientation angulaire du porte-injecteur (10) par rapport à la culasse (16), **caractérisé en ce que** les moyens (90) d'immobilisation en rotation du porte-injecteur (10) sont constitués par une pièce rapportée (66) qui est fixée sur la bride (54) de serrage axial.

2. Agencement selon la revendication 1, **caractérisé en ce que** la pièce (66) comporte axialement au moins un socle inférieur (68) de fixation de la pièce (66) sur la bride de serrage (54), une partie intermédiaire de liaison (70) et une partie supérieure d'immobilisation (72) destinée à coopérer avec une partie complémentaire (48, 50) du corps (20) du porte-injecteur (10).

3. Agencement selon la revendication 2, **caractérisé en ce que** le socle inférieur de fixation (68) comporte à l'une au moins de ses extrémités transversales un perçage (80) traversé par des moyens de fixation (60), tels qu'une vis, de manière à fixer la pièce (66) sur la bride de serrage (54).

4. Agencement selon la revendication 3, **caractérisé en ce que** les moyens de fixation (60) sont constitués par des moyens de serrage axial de la bride (54) sur la culasse (16).

5. Agencement selon l'une des revendications 2 à 4, **caractérisé en ce que** le socle (68) de la pièce (66) et la bride de serrage (54) comportent des moyens complémentaires de détrompage (84, 86, 88) de manière à garantir un positionnement correct de la pièce (66) lors de son montage sur la bride (54).

6. Agencement selon la revendication 2, **caractérisé en ce que** la partie intermédiaire (70) de liaison du socle (68) et de la partie supérieure d'immobilisation (72) est constituée par une tige (70) qui s'étend axialement sur une hauteur déterminée en fonction du type de porte-injecteur (10) et qui est déportée radialement par rapport à l'axe X-X du puits (52) de la culasse (16) de manière à ne pas interférer avec le corps axial (20) du porte-injecteur (10).

7. Agencement selon la revendication 6, **caractérisé en ce que** la partie supérieure d'immobilisation (72) comporte au moins un moyen d'immobilisation (90) comportant des moyens de blocage, tels qu'une face verticale interne (98), qui coopèrent avec une partie complémentaire (48, 50) du corps (20) du porte-injecteur (10) pour l'immobiliser en rotation par rapport à la culasse (16).

8. Agencement selon la revendication 6, **caractérisé en ce que** la partie supérieure d'immobilisation (72) est une fourche (92) ouverte horizontalement qui comporte une branche transversale supérieure commune (94) et à partir de laquelle s'étendent globalement horizontalement et parallèlement deux dents (96) qui coopèrent avec la paroi externe (46) du corps annulaire (20) pour immobiliser le porte-injecteur (10) en rotation.

9. Agencement selon la revendication 8, **caractérisé en ce que** chaque dent (96) de la fourche (92) comporte une face verticale interne de blocage (98) qui coopère avec une face verticale d'appui (50) complémentaire du corps (20) du porte-injecteur (10).

10. Agencement selon la revendication 9, **caractérisé en ce que** chaque face interne de blocage (98) de la fourche (92) est plane et comprise dans un plan vertical (P) formant avec un plan vertical de référence (PVR), défini comme le plan vertical qui est orthogonal au plan transversal passant par l'axe X-X, un angle aigu (α) déterminé correspondant à l'indexation angulaire du porte-injecteur (10) dans une position de fonctionnement donnée par rapport au puits (52) de la culasse (16).
